# EUROPÄISCHE PATENTANMELDUNG

(11) **EP 0 949 291 A2**
(43) Veröffentlichungstag der Anmeldung: **13.10.1999**
(21) Anmeldenummer: 99105989.0
(22) Anmeldetag: 25.03.1999
(51) Int. Cl.: C08J 5/12

(54) **Verfahren zur Verbesserung der Anbindung eines elastomeren, polymeren Werkstoffs an ein Stützelement**

(30) Priorität: 08.04.1998 DE 19815758
(71) Anmelder: Firma Carl Freudenberg, 69469 Weinheim (DE)
(72) Erfinder: Leitner, Helmut Dr., 69502 Hemsbach (DE)

(57) **Zusammenfassung**

Verfahren zur Verbesserung der Anbindung eines elastomeren, polymeren Werkstoffs an ein Stützelement während der Anformung und Vulkanisation, bei dem das Stützelement im Bereich der Anbindungszone mit einer flüssigen Zusammensetzung eines Haftvermittlers benetzt, die so gebildete Beschichtung verfestigt und der elastomere Werkstoff nachfolgend angeformt und durch Vulkanisation verfestigt wird, wobei als Haftvermittler eine wässrige und/oder eine alkoholische Lösung eines Thiocyanatosilans verwendet wird.

## Beschreibung

### Technisches Gebiet

Die Erfindung betrifft ein Verfahren zur Verbesserung der Anbindung eines elastomeren, polymeren Werkstoffs an ein Stützelement wahrend der Anformung und Vulkanisation, bei dem das Stützelement im Bereich der Anbindungszone mit einer flüssigen Zusammensetzung eines Haftvermittlers benetzt die so gebildete Beschichtung verfestigt und der elastomere Werkstoff nachfolgend angeformt und durch Vulkanisation verfestigt wird.

### Stand der Technik

Es ist an sich bekannt, Silane als Haftvermittler beim Anvulkanisieren eines elastomeren Werkstoffs an ein Stützelemente zu verwenden. Diese bekannte Verfahrensweise führt aber nicht bei allen elastomeren Werkstoffen zu einer mechanisch hinreichend festen Verbindung zwischen dem elastomeren Werkstoff und dem Stützelement. Zur Anbindung von NBR werden daher Harze oder Latices verwendet, um eine hinreichend feste Anbindung zu erzielen. Für die praktische Anwendung in großtechnischen Produktionen ist das mit großem Aufwand verbunden.

Thiocyanatosilane sind an sich bekannt als Additive zur Verwendung bei der Herstellung von homogenen Gummimischungen. Sie haben den Zweck, einer Gummimischung eine bessere Festigkeit zu geben.

### Darstellung der Erfindung

Der Erfindung liegt die Aufgabe zugrunde, einen Haftvermittler zu zeigen, der einfach in der Anwendung ist und eine gute Haftfestigkeit bei Verwendung schwefelvernetzter, elastomerer Werkstoffe gewährleistet.

Zur Lösung dieser Aufgabe wird erfindungsgemäß ein Verfahren der eingangs genannten Art vorgeschlagen, daß die kennzeichnenden Merkmale von Anspruch 1 aufweist.

Thiocyanatosilane haben bisher keinerlei Verwendung als Haftvermittler oder bei der Erzeugung von Haftvermittlern gefunden. Sie gestatten es überraschenderweise, eine äußerst gute Haftfestigkeit beim Anvulkanisieren eines beliebigen schwefelvernetzten, elastomeren Werkstoffs an einen festen Körper zu erzielen, beispielsweise eines elastomeren Werkstoffs an Metall. Dazu ist es wichtig, eine äußerst dünne und homogene Filmschicht auf dem Stützkörper zu erzeugen, die weitestgehend frei ist von Unregelmäßigkeiten wie Blasenbildungen, unterschiedliche Schichtdicken in verschiedenen Teilbereichen und ähnlichem. Überraschenderweise gelingt es unter Verwendung von Thiocyanatosilanen, diese Erfordernisse problemlos zu erfüllen. Es wird angenommen, daß insbesondere hierauf die ausgezeichnete Haftfestigkeit beim nachfolgenden Anvulkanisieren schwefelvernetzter, elastomerer Werkstoffe zurückzuführen ist.

Das Thiocyanatosilan wird zweckmäßig in gelöster Form verwendet, wobei der Feststoffgehalt der Lösung maximal 10 Gewichts% an Thiocyanatosilan betragen soll, vorteilhaft weniger als 5 Gewichts%. Bei einem praktischen Ausführungsbeispiel, welches in der Massenproduktion von Wellendichtringen zur Anwendung gelangt, beträgt der Gewichtsgehalt 0,8 bis 1,0 Gewichts%, vorteilhaft 0,9 Gewichts%. Hierdurch ist gewährleistet, daß sich eine besonders dünne und gleichmäßige Beschichtung der Stützelemente ergibt, beispiels-weise der aus Stahlblech bestehenden Stützringe von Radialwellendichtringen. Diese können einen Durchmesser haben, der in der Kategorie von 5 mm beginnt.

Die Lösung kann einen Anteil von maximal 50 bis 80 Gewichts% Alkohol enthalten, um die Homogenität der Filmbildung noch weiter zu verbessern und Ungleichmäßigkeiten zu vermeiden.

Als Alkohol können praktisch alle bekannten Alkohole zur Anwendung gelangen, beispielsweise Methanol, Ethanol, Propanol, Isopropanol, Butanole, Pentanole, Hexanole und/ oder Mischungen dieser verschiedenen Alkohole. Die Verwendung von Ethanol wird im allgemeinen bevorzugt.

Der Haftvermittler muß schonend getrocknet werden, um zu erreichen, daß sich eine besonders gleichmäßige Filmschicht ausbildet. Die Anwendung von Temperaturen zwischen 20 und 80 °C, vorteilhaft zwischen 40 und 60 °C, hat sich hervorragend bewährt.

Eine besonders gute Haftfestigkeit läßt sich erreichen, wenn der Haftvermittler im Anschluß an das Trocknen bei einer Temperatur von 50 bis 200 °C während einer Zeitspanne von 5 bis 20 Minuten nachgetempert wird. Insbesondere für sicherheitsrelevante Anwendungen ist das Nachtempern von erheblicher Bedeutung, beispielsweise für Anwendungen im Bereich der Stützlagerungen von Maschinen und Geräten sowie in bezug auf die Anbindung der Gummidichtlippen an einen Dichtring, die in Stoßdämpfern, in Radlagern oder im Hydraulikbereich zur Anwendung gelangt.

Falls eine wässrige Lösung bei der Bildung der haftvermittelnden Schicht zur Anwendung gelangt, hat es sich als vorteilhaft bewährt, wenn die verwendete Lösung angesäuert ist. An sich können beliebige Säuren verwendet werden. Als vorteilhaft hat sich insbesondere die Verwendung von Essigsäure erwiesen. Die Festigkeit der Haftung schwefelvernetzter Vulkanisate läßt sich verbessern, wenn in dem Thiocyanatosilan Aminosilane enthalten sind. Der diesbezügliche Gehalt soll maximal 50 Gewichts% betragen. Er liegt bei der praktischen Anwendung in allgemeinen im Bereich von 0,2 Gewichts%.

Die Erfindung wird nachfolgend anhand von Beispielen weiter verdeutlicht.

### Beispiel 1

Im Anschluß an eine vorausgegangenen Entfettung wird ein Blechstreifen aus Stahl in eine wässrige Lösung eines Thiocyanatosilanes eingetaucht und nachfolgend getrocknet. Die Lösung hat die folgende Zusammensetzung:
- Wasser: 25 Gewichts%
- Ethanol: 74 Gewichts%
- Essigsäure: 0,1 Gewichts%
- Thiocyanatosilan: 0,9 Gewichts%

Nach der Entnahme wird der Blechstreifen bei einer Temperatur von 50 °C während einer Zeitspanne von 30 Minuten getrocknet und anschließend in eine Temperkammer überführt für eine Zeitdauer von 20 Minuten. Die Temperatur in der Temperkammer beträgt 175 °C. Im Anschluß daran wird an den Blechstreifen unter Verwendung eines Vulkanisationswerkzeuges ein Gummikörper angeformt und durch nachfolgende Vulkanisation verfestigt und mit dem Blechstreifen verbunden. Der verwendete Gummiwerkstoff hat die folgende Zusammensetzung:
- Nitrilbutadien-Kautschuk: 30 Gewichts%
- Ruß: 30 Gewichts%
- Silikate: 30 Gewichts%
- Verarbeitungshilfsmittel: 3 Gewichts%
- Alterungsschutzmittel: 2 Gewichts%
- Weichmacher: 2 Gewichts%
- Vulkanisationschemikalien: 3 Gewichts%

Die Vulkanisationstemperatur beträgt 190 °C, die Vulkanisationszeit 4 Minuten.

Im Anschluß an die Vulkanisation wird das Verbundteil aus dem Vulkanisationswerkzeug entnommen, abgekühlt und die Festigkeit der erhaltenen Verbindung zwischen dem Gummiformkörper und dem Blechstreifen gemessen. Die spezifische Haftfestigkeit beträgt 11 N/mm². Die entstehende Rißzone liegt innerhalb des Gummikörpers. Die Oberfläche des Blechstreifens ist somit im Anschluß an das Abreißen des Gummikörpers weiterhin von Gummi bedeckt.

### Beispiel 2

Der vorstehende Versuch wird wiederholt unter Verwendung einer wässrigen Lösung zur Erzeugung der Haftvermittlerbeschichtung, die statt des Alkohols Spuren von Essigsäure enthält. Der Essigsäuregehalt beträgt etwa 0,2 Gewichts%. Die spezifische Haftfestigkeit der Verbindung war etwas besser als vorstehend angegeben. Sie lag bei 12 N/mm².

Im Bereich der Bruchzone waren winzige Fehlstellen mit bloßem Auge erkennbar.

### Beispiel 3

Die Verfahrensweise nach Beispiel 1 wird wiederholt, zusätzlich zu dem Thiocyanatosilan wird jedoch der Mischung ein Gehalt von 0,2 Gewichts%, bezogen auf den Feststoffgehalt, eines Aminosilans zugesetzt. Die Verbindung war völlig fehlerfrei und lag bei 13 N/m².

### Beispiel 4

Die Verfahrensweise gemäß Beispiel 1 wird wiederholt, mit der Abweichung, daß das Thiocyanatosilan ersetzt wird durch, 4,4,15,15-Tetraethoxy-3,16-Dioxa-8,9,10,11-Tetrathio-4,15-Disilanoctadecan, wie beispielsweise unter der Handelsbezeichnung SI 69 erhältlich. Die spezifische Haftfestigkeit der Verbindung lag bei 1,3 N/mm² und war damit vollkommen unzureichend für höherwertige Anwendungen.

## Patentansprüche

1. Verfahren zur Verbesserung der Anbindung eines elastomeren, polymeren Werkstoffs an ein Stützelement während der Anformung und Vulkanisation, bei dem das Stützelement im Bereich der Anbindungszone mit einer flüssigen Zusammensetzung eines Haftvermittlers benetzt, die so gebildete Beschichtung verfestigt und der elastomere Werkstoff nachfolgend angeformt und durch Vulkanisation verfestigt wird, **dadurch gekennzeichnet**, daß als Haftvermittler eine wässrige und / oder eine alkoholische Lösung eines Thiocyanatosilans verwendet wird.

2. Verfahren nach Anspruch 1, dadurch gekennzeichnet, daß in der Lösung maximal 10 Gewichts% des Thiocyanatosilans enthalten sind.

3. Verfahren nach einem der Ansprüche 1 oder 3, dadurch gekennzeichnet, daß in der Lösung maximal 50 bis 96 Gewichts% Alkohol enthalten sind.

4. Verfahren nach einem der Ansprüche 1 bis 3, dadurch gekennzeichnet, daß als Alkohol Methanol, Ethanol, Propanol, Isopropanol, Butanole, Pentanole, Hexanole oder Mischungen dieser Alkohole enthalten sind.

5. Verfahren nach einem der Ansprüche 1 bis 4, dadurch gekennzeichnet, daß der Haftvermittler nach seiner Aufbringung bei einer Temperatur von 20 bis 80 °C getrocknet wird.

6. Verfahren nach Anspruch 5, dadurch gekennzeichnet, daß der Haftvermittler nach seiner Aufbringung bei einer Temperatur von 40 bis 60 °C getrocknet wird.

7. Verfahren nach einem der Ansprüche 1 bis 6, dadurch gekennzeichnet, daß der Haftvermittler nach dem Trocknen bei einer Temperatur von 50 bis 200 °C während einer Zeitspanne von 5 bis 20 Minuten nachgetempert wird.

8. Verfahren nach einem der Ansprüche 1 bis 7, bei dem eine wässrige Lösung zur Anwendung gelangt, dadurch gekennzeichnet, daß die Lösung angesäuert ist.

9. Verfahren nach Anspruch 8, dadurch gekennzeichnet, daß die Lösung unter Verwendung von Essigsäure angesäuert ist.

10. Verfahren nach einem der Ansprüche 1 bis 9, dadurch gekennzeichnet, daß neben dem Thiocyanatosilan Aminosilane enthalten sind.

11. Verfahren nach Anspruch 10, dadurch gekennzeichnet, daß der Anteil der Aminosilane, bezogen auf den Feststoffgehalt der Mischung, maximal 5 Gewichts% beträgt.
